Europäisches Patentamt

European Patent Office

Office européen des brevets

(11) Veröffentlichungsnummer: **0 137 050**
**A1**

(12) # EUROPÄISCHE PATENTANMELDUNG

(21) Anmeldenummer: **81108902.8**

(22) Anmeldetag: **26.10.81**

(51) Int. Cl.⁴: **F 16 H 25/22**

(30) Priorität: 31.08.77 DE 2739136
20.09.77 DE 2742163
08.10.77 DE 2745404
03.04.78 DE 2814228

(43) Veröffentlichungstag der Anmeldung:
**17.04.85** Patentblatt **85/16**

(84) Benannte Vertragsstaaten:
**BE CH DE FR GB LI NL SE**

(71) Anmelder: **Grisebach, Hans-Theodor**
**Kampstrasse 7**
**D-4750 Unna(DE)**

(72) Erfinder: **Betzing, Rudolf**
**Vogelherd 3**
**D-5000 Hagen(DE)**

(72) Erfinder: **Grisebach, Hans Theodor**
**Kampstrasse 7**
**D-4750 Unna(DE)**

(74) Vertreter: **Patentanwälte Zellentin**
**Zweibrückenstrasse 15**
**D-8000 München 2(DE)**

(54) **Stellgerät mit Kugelschraubengetriebe.**

(57) Das äußere Teleskopteil 6 ist ein unrundes Außenrohr 9, vorzugsweise ein Vierkantrohr, dessen Innenflächen ein dämpfungselastisch wirkender auf einen Gleitsteinträger befestigter Gleitstein geführt ist. Die Kugelspindel 3 durchdringt einen Gleitsteinträger 11, der das Verbindungsglied zwischen den Anschlußmitteln des inneren Stößelendes 14 und der Kugelumlaufmutter 4 bildet. Am äußeren Stößelende sind die zu betätigenden Organe angeschlossen und das kreisrunde Rohr des Stößels führt die Kugelspindel und ist mit einem Flansch 18 verbunden, der seinerseits an Druck- und Zuglagern 19 abgestützt und gelagert ist und diese mit den Getrieben, Planetengetriebe 21, Zahnradgetriebe 22 sowie mit der Läuferwelle verbindet.

- 1 -

Europäische Patentanmeldung

des

Hans-Theodor Grisebach, Kamnstr. 7, 4750 Unna

## Stellgerät mit Kugelschraubengetriebe

Die Erfindung bezieht sich auf Stellgeräte mit Kugelschraubengetriebe mit einer oder mehrerer Kugelspindeln
und Kugelumlaufmuttern zur Umwandlung einer drehenden
in eine hin- und hergehende Bewegung mit axialelastischen
Anschlägen und/oder Zwischengliedern als Dämpfungsmittel
zum Abbau von Spitzenlasten, wobei die Kugelumlaufmutter
axialbeweglich mit einem von zwei Teleskopteilen verbunden und gegenüber dem anderen Teleskopteil drehgesichert ist und die Kugelspindel gegenüber beiden Teleskopteilen von einem oder mehreren Antriebsmotoren mit
zusätzlichen Ruhestrombremsen angetrieben sind (DE-AS
18 05 56δ). Diese vorbeschriebenen Merkmale sind auch

teilweise der später veröffentlichten DE-OS 27 39 150 und der später veröffentlichten DE-OS 27 34 530 entnehmbar. Hier ist zwar schon eine Vierkantrohrführung mit Gleitstein vorgeschlagen, es fehlen jedoch wesentliche Eigenschaften, die für eine universelle Anwendung dieser für Spezialzwecke vorgeschlagenen Geräte, nötig sind.

An Stellgeräte werden sehr hohe Anforderungen in bezug auf möglichst geringes Gewicht, hohe Biegesteifigkeit, leichte Montage und Demontage, gute Auswechselbarkeit von Verschleißteilen, hohe Bewegungsbeschleunigung, hoher Wirkungsgrad, Narrensicherheit und vor allem Dauerstandfestigkeit gestellt.

Die Erfindung hat sich daher die Aufgabe gestellt, unter Ausnutzung bewährter, bekannter Konstruktionsprinzipien die vorerwähnten Forderungen bei geringstem Herstellungspreis in einem Gerät zu kombinieren und dieses Gerät für einen sehr breiten Anwendungsfächer geeignet zu machen.

Der kennzeichnende Teil des Patentanspruchs 1 kombiniert das Merkmal, daß das äußere Teleskopteil ein unrundes Außenrohr, vorzugsweise ein Vierkantrohr ist, an dessen Innenflächen ein dämpfungselastisch wirkender auf einem Gleitsteinträger befestigter Gleitstein geführt ist, mit dem Merkmal, daß der Gleitsteinträger das Verbindungsglied zwischen den Anschlußteilen des inneren Stößelendes und denen der Kugelumlaufmutter bildet, während die Anschlußteile (Innenwände) des äußeren Stößelendes dem Anschluß weiterer Elemente dienen.

Ein nach der Erfindung gestaltetes Stellgerät erfüllt die Forderungen, die eingangs gestellt wurden. Es wird auf die üblicherweise bei Stellgeräten früherer Bauart verwendeten, der Aufnahme von rotatorischen und axialen Reaktionsmomenten erforderlichen schweren Spannanker ver-

- 3 -

zichtet. Es können im weiten Bereich Änderungen der Durchmesser von Stößel und Außenrohr erfolgen, ohne daß grundsätzliche Konstruktionsänderungen notwendig sind. Die Längen bzw. die Hublängen des Stellgerätes können durch entsprechende Variation der Längen des Stößelrohres, des Außenrohres und der Spindel bestimmt werden.

Die Ansprüche 6, 7, 8 und 9 befassen sich als unabhängige Ansprüche mit der Aufgabe mehrere Stellgeräte zu einem einzigen Stellgerät mit größerer Geschwindigkeit bzw. größerem Hub zu kombinieren, um die getrennte Konstruktion und Entwicklung entsprechender Geräte einzusparen und somit mit Normgeräten zusätzliche Aufgaben erfüllen zu können. Dabei sollen auch die Stellgeschwindigkeiten in einem möglichst großen Bereich variabel sein.

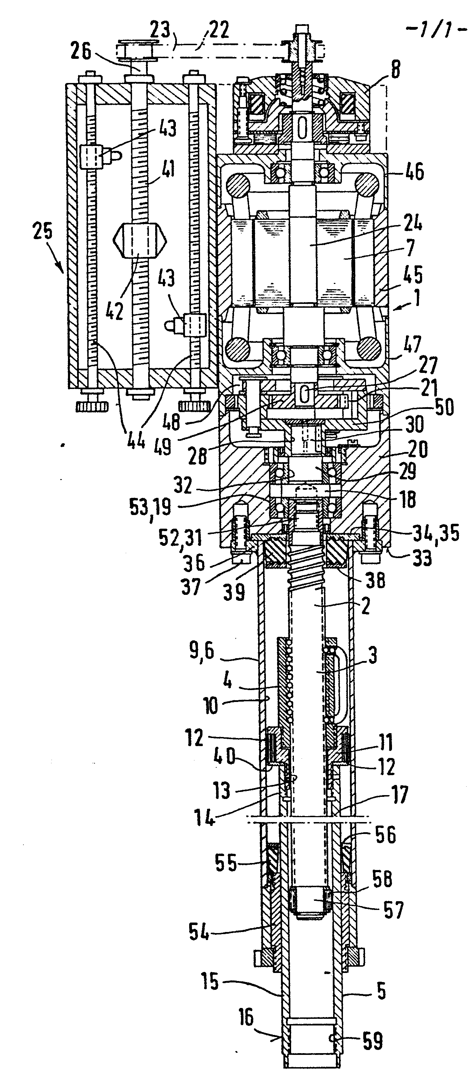

Im folgenden wird die Erfindung anhand der Zeichnung
näher erläutert.

Bei dem erfindungsgemäßen Stellgerät 1 wird mit der
Läuferwelle 24 des elektrischen Antriebsmotors 7 über
ein Zahnriemengetriebe 22 die Welle 26 eines Positioniergerätes 25 (Spindelwelle 41) angetrieben. Auf der Spindelwelle 41 bewegt sich der als Mutter ausgebildete Kontaktreiter 42 und schaltet die Kontakte 43, die auf den
Stellschrauben 44 beweglich sind.

Auf der Läuferwelle 24 ist direkt oder indirekt eine
Ruhestrombremse 8, die als Ruhestrommagnetbremse ausgebildet sein kann, angeordnet. Die Funktion derartiger
Ruhestrommagnetbremsen ist bekannt. Das Antriebsmotorgehäuse 45 ist beidendig durch den Lagerdeckel außen 46
und den Lagerdeckel innen 47 geschlossen. Der Lagerdeckel
innen 47 bildet mit seiner stirnseitigen Ausnehmung 48
einen Teil des Getriebegehäuses des Planetengetriebes 21.
Eine Steckverbindung 27 verbindet die Läuferwelle 24 mit
Teilen des Planetengetriebes (Sonnenrad 49). Der Planetenradträger 50 ist auf den Zapfen 30 einer Zwischenwelle 29
aufgesteckt und befestigt, deren Flansch 18 zwischen den
Kugellagerringen 32 eingespannt ist. Die Kugelspindel 3
ist mit einem Gewindezapfen 52 in eine nicht näher bezeichnetes Innengewinde der Zwischenwelle 29 eingeschraubt und
somit drehsicher verbunden. Die Kugellagerringe 32, die
Zwischenwelle 29 und der Flansch 18 weisen nur geringe
Durchmesser auf und bilden daher nur eine vergleichsweise
sehr geringe Schwungmasse, durch die bekanntlich bei Beschleunigung und Verzögerung Spitzenbelastungen im Kugelumlaufgetriebe entstehen. Die von der Kugelspindel 3 auf
die Zwischenwelle 29 übertragenen Druck- und Zugkräfte
werden von dem Flansch 18 in beiden Richtungen auf die
inneren Kugellagerringe 32 übertragen, die diese Kräfte
über die Kugeln auf die Außenringe 53 weitergeben.

Bei Stellgeräten läßt es sich niemals ausschließen, daß axial gegeneinander bewegte Teile, wie z.B. die Kugelumlaufmutter 4 oder der Gleitsteinträger 11 gegen Festpunkte anschlagen und somit Spitzenkräfte durch Verzögerung auftreten, die die empfindliche Mechanik des Kugelumlaufgetriebes zerstören können. In einer stirnseitigen Ausnehmung 36 des Lagerkörpers 20 ist daher ein Dämpfungspolster 39 eingesetzt, das zwischen einer Platte 35 und einer Anschlagplatte 38 einvulkanisiert ist.

Analog dazu trägt der Gleitlagerstopfen 54, der das kreisrunde Ende 15 des Stößels 17 führt, ein entsprechendes Dämpfungsglied 55 mit Anschlagring 56.

In bekannter Weise ist das freie Ende 57 der Kugelspindel 3 über entsprechende Führungsteile 58 gegenüber den Innenflächen des kreisrunden Rohres 15 geführt. In das Innengewinde 59 des äußeren Stößelendes 15 (inneres Teleskopteil 5) lassen sich nun beliebige Anschlußelemente, wie Anschlußaugen, Dämpfungsglieder, Lagerkörper und dergleichen anschließen, die jederzeit auswechselbar sind, um das erfindungsgemäße Stellgerät den verschiedenen Anwendungszwecken anzupassen.

Das Positioniergerät 25 ist in der Zeichnung um 180° gedreht dargestellt, um die Funktion besser erläutern zu können. In Wirklichkeit würde bei rechteckiger bzw. quadratischer Ausbildung der Gehäuseteile dieses Gerät lediglich ein flaches, sich der Form des Gehäuses anpassendes Teil bilden. Es bleibt aber unbenommen, ein derartiges Gerät auch anders zum Stellgerät selbst anzuordnen.

Das äußere Teleskopteil 6, unrundes Außenrohr 9 (bzw. eines entsprechenden quadratischen oder dreieckigen Rohres) sollte leicht aber biegesteif ausgebildet und mit einwandfreien inneren Führungsflächen versehen sein.

Die Abmessungen bestimmen sich nach den auf die beiden Teleskopteile ausgeübten Biegekräften sowie den von dem Gleitstein übertragenen Drehmomenten. Die Torsionselastizität des Gleitsteins 12 kann dadurch erzielt werden, daß der Gleitstein aus einem dämpfungselastischen Material besteht. Als Gleitelemente können auch starre Elemente verwendet werden. Dann sind der Gleitsteinträger und die gleitenden oder rollenden Führungselemente mit dämpfungselastischen Zwischenmedien verbunden.

Insgesamt ergibt sich ein für viele Anwendungszwecke geeignetes, vergleichsweise sehr preiswertes und zuverlässiges Stellgerät, bei dem die beiden gegeneinander bewegbaren Teleskopteile so aneinander geführt sind, daß erhebliche Biegemomente übertragen werden können. Dies ist bei bekannten Stellgeräten, bei denen sich die Kugelumlaufmutter an radial nachgiebigen Elementen abstützt, nicht der Fall. Diese Abstützung erfolgt bei bekannten Geräten an innerhalb des Außenrohres angeordneten Zugankern. Die dazu erforderlichen Abstützteile haben meist einen sehr großen Durchmesser und somit eine große Masse, deren Beschleunigung und Verzögerung die empfindlichen Teile des Kugelumlaufgetriebes belastet und damit zusätzliche Dämpfungsmittel erfordern. Wichtig für die vorteilhafte Ausgestaltung eines derartigen Stellgerätes ist auch die leichte Zerlegbarkeit und damit die schnelle Austauschbarkeit von Verschleißteilen.

Bezugszahlenliste, Ausscheidung I

1      Stellgerät

2      Kugelschraubengetriebe

3      Kugelspindel

4      Kugelumlaufmutter

5      inneres Teleskopteil

6      äußeres Teleskopteil

7      Antriebsmotor

8      Ruhestrombremse

9      unrundes Außenrohr

10      Innenflächen

11      Gleitsteinträger

12      Gleitstein

13      Innengewinde des inneren Stößelendes

14      inneres Stößelende

15      äußeres Stößelende

16      kreisrundes Rohr

17      Stößel

18      Flansch

19      Zug- und Drucklager

20      Lagerkörper

21      Planetengetriebe

22      Zahnriemengetriebe

23      Treibriemen

24      Läuferwelle

25      Positioniergerät

26      parallele Welle

27      Steckverbindung

28      weitere Steckverbindung

29      Zwischenwelle

30      Steckzapfen

31      Gewindebuchse

32      Kugellagerinnenringe

33      Stirnseite

34      Ausnehmung

35      Platte

36      Fuß

37      Schrauben

- 8 -

0137050

| | |
|---|---|
| 38 | Anschlagplatte |
| 39 | Dämpfungspolster |
| 40 | Scheibe |
| 41 | Spindelwelle |
| 42 | Kontaktreiter |
| 43 | Kontakte |
| 44 | Stellschrauben |
| 45 | Antriebsmotorgehäuse |
| 46 | Lagerdeckel außen |
| 47 | Lagerdeckel innen |
| 48 | stirnseitige Ausnehmung |
| 49 | Sonnenrad |
| 50 | Planetenradträger |
| 51 | |
| 52 | Gewindezapfen |
| 53 | Außenringe |
| 54 | Gleitlagerstopfen |
| 55 | Dämpfungsglied |
| 56 | Anschlagring |
| 57 | freies Ende der Kugelspindel |
| 58 | Führungsteile (für Kugelspindel) |
| 59 | Innengewinde Stößelende |

0137050

Patentansprüche:

1. Stellgerät (1) mit Kugelschraubengetriebe (2) mit einer oder mehreren Kugelspindeln (3) und Kugelumlaufmuttern (4) zur Umwandlung einer drehenden in eine hin- und hergehende Bewegung mit axialelastischen Anschlägen und/oder Zwischengliedern als Dämpfungsmittel zum Abbau von Spitzenlasten, wobei die Kugelumlaufmutter (4) mit dem inneren Teleskopteil (5) verbunden und gegenüber dem äußeren Teleskopteil (6) drehgesichert ist und die Kugelspindel (3) gegenüber beiden Teleskopteilen von einem oder mehreren Antriebsmotoren (7) mit zugeordneten Ruhestrombremsen (8) drehbar angetrieben ist (sind), dadurch gekennzeichnet,

   daß das äußere Teleskopteil (6) ein unrundes Außenrohr (9), vorzugsweise ein Vierkantrohr ist, an dessen Innenflächen (10) ein dämpfungselastisch wirkender, auf einem Gleitsteinträger (11) befestigter Gleitstein (12) geführt und

   daß ein von der Kugelspindel (3) durchdrungenes Organ (Gleitsteinträger 11) das Verbindungsglied zwischen den Anschlußmitteln (Innengewinde 13) des inneren Stößelendes (14) und der Kugelumlaufmutter (4) bildet, während die Anschlußmittel des äußeren Stößelendes (15) dem Anschluß der zu betätigenden Organe dienen, und

   daß das kreisrunde Rohr (16) des Stößels (17) die Kugelspindel (3) führt und diese über einen angeschlossenen Flansch (18) an Zug- und Drucklagern (19) (Lagerkörper 20) abgestützt und gelagert ist, sowie mit dem oder den Getrieben (Planetengetriebe 21, Zahnriemengetriebe 22, Treibriemen 23) und der Läuferwelle (24) in Verbindung steht.

2. Stellgerät nach Anspruch 1,

   dadurch gekennzeichnet,

   daß das Zahnriemengetriebe (22) über Treibriemen (23)

- 2 -                                    0137050

ein Positioniergerät (25) mit zur Läuferwelle (24) paralleler Welle (26) antreibt.

3. Stellgerät nach Anspruch 1 oder 2, dadurch gekennzeichnet, daß die Läuferwelle (24) über eine Steckverbindung (27) mit einem Planetengetriebe (21) in Verbindung steht, das seinerseits über eine weitere Steckverbindung (28) mit einer in dem Lagerkörper (20) zug- und druckfest gelagerten Zwischenwelle (29) gekuppelt ist, die auf der Getriebeseite als Steckzapfen (30) und auf der Gegenseite als Gewindebuchse (31) ausgebildet ist und diese Zwischenwelle (19) einen zwischen den Kugellagerinnenringen (32) eingespannten Flansch (18) aufweist.

4. Stellgerät nach einem oder mehreren der Ansprüche 1 bis 3, dadurch gekennzeichnet, daß der die Zug- und Drucklager (19) aufnehmende Gehäuseabschnitt des Lagerkörpers (20) an seiner Stirnseite (33) eine Ausnehmung (34) aufweist, die eine Platte (35) und den Fuß (36) des unrunden Außenrohres (9) aufnimmt, der mit dem Lagerkörper (20) verschraubt ist (Schrauben 37) und dadurch die Platte (35) hält, die gemeinsam mit einer Anschlagplatte (38) ein einvulkanisiertes Dämpfungspolster (39) einschließt.

5. Stellgerät nach einem oder mehreren der Ansprüche 1 bis 4, dadurch gekennzeichnet, daß eine den Gleitstein (12) auf dem Gleitsteinträger (11) haltende Scheibe (40) zwischen dem inneren Stößelende (14) und dem Gleitsteinträger (11) eingespannt ist.

- 3 -

6. Stellgerät nach einem oder mehreren der Ansprüche 1 bis 5, dadurch gekennzeichnet, daß die Kugelspindel (3) und die Läuferwelle (24) seitlich versetzt parallel zueinander angeordnet sind.

7. Stellgerät mit Kugelschraubengetriebe (2) mit einer oder mehreren Kugelspindeln (3) und Kugelumlaufmuttern (4) zur Umwandlung einer drehenden in eine hin- und hergehende Bewegung mit axialelastischen Anschlägen und/oder Zwischengliedern als Dämpfungsmittel zum Abbau von Spitzenlasten, wobei die Kugelumlaufmutter (4) mit einem von zwei Teleskopteilen (5) verbunden und gegenüber dem anderen Teleskopteil (6) dreh- gesichert ist und die Kugelspindel (3) gegenüber beiden Teleskopteilen von einem oder mehreren Antriebsmotoren (7) mit zugeordneten Ruhestrombremsen (8) angetrieben ist und das äußere Teleskopteil (6) ein unrundes Außenrohr (9) ist, vorzugsweise ein Vierkantrohr, an dessen Innenflächen (10) ein dämpfungs- elastisch wirkender, auf einem Gleitsteinträger (11) befestigter Gleitstein (12) geführt ist, dadurch gekennzeichnet, daß mehrere Stellgeräte (1) miteinander gekuppelt sind, derart, daß sich ihre Hubwege und Hubgeschwindigkeiten addieren oder subtrahieren.

8. Stellgerät nach Anspruch 7, dadurch gekennzeichnet, daß die Stellgeräte (1) in paralleler, überlappender Anordnung zueinander gekuppelt sind.

9. Stellgerät nach Anspruch 8, dadurch gekennzeichnet, daß die Stellgeräte (1) in linearer Anordnung miteinander verbunden sind.

10. Stellgerät nach Anspruch 9,
dadurch gekennzeichnet,
daß die Antriebe zwischen den einzelnen Geräten angeordnet, den von allen Stellgeräten gebildeten Träger
bambusknotenartig versteifen und als Verbindungsglieder zwischen den Einzelgeräten dienen.

# EUROPÄISCHER RECHERCHENBERICHT

**0137050**
Nummer der Anmeldung

EP 81 10 8902

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | US-A-2 910 883 (REED AND JACKSON) * Insgesamt * | 1,7 | F 16 H 25/22 |
| A | US-A-3 743 909 (RITCHIE) * Figur 1; Spalte 1, Zeilen 45-53; Spalte 3, Zeilen 4-10; Spalte 4, Zeile 34 - Spalte 5, Zeile 14 * | 1,7 | |
| A | US-A-2 806 383 (GEYER H.M.) * Insgesamt * | 1,3,6 | |
| A | US-A-2 398 841 (MORRIS J.K.) * Insgesamt * | 1,7 | |
| A | US-A-2 562 689 (BALDWIN) * Figuren 3,4; Spalte 2, Zeilen 12-18; Spalte 3, Zeilen 18-25 * | 1,7 | RECHERCHIERTE SACHGEBIETE (Int. Cl. ³) F 16 H B 25 J B 66 F |

Der vorliegende Recherchenbericht wurde für alle Patentansprüche erstellt.

| Recherchenort DEN HAAG | Abschlußdatum der Recherche 06-04-1984 | Prüfer HARRISON M.C. |
|---|---|---|